# EUROPÄISCHE PATENTANMELDUNG

(11) **EP 1 860 629 A1**
(43) Veröffentlichungstag der Anmeldung: **28.11.2007**
(21) Anmeldenummer: 07450091.9
(22) Anmeldetag: 18.05.2007
(51) Int. Cl.: G09B 29/00, G09B 29/10, A47B 13/08

(54) **Orientierungshilfe**

(30) Priorität: 18.05.2006 AT 3982006 U
(71) Anmelder: Fast, Rudolf, 8792 St. Peter-Freienstein (AT)
(72) Erfinder: Fast, Rudolf, 8792 St. Peter-Freienstein (AT)
(74) Vertreter: Wirnsberger, Gernot

(57) **Zusammenfassung**

Die Erfindung betrifft eine Orientierungshilfe. Um ortsunkundigen Personen eine Orientierungshilfe bereitzustellen, mit welcher rasch und zuverlässig auf geografische Gegebenheiten geschlossen werden kann und welche jedermann zur Verfügung steht, ist erfindungsgemäß vorgesehen, dass die Orientierungshilfe eine Tischplatte (1) für öffentlich zugängliche Tische umfasst, wobei auf einer Stellfläche (2) der Tischplatte (1) eine geografische Karte (3) sichtbar angebracht ist.

## Beschreibung

Wenn Personen Reisen oder Ausflüge tätigen, Wanderungen oder Radtouren unternehmen oder Urlaub machen, so begeben sie sich in der Regel in ein ihnen unbekanntes Gebiet, dessen geografische Gegebenheiten sie nicht oder nicht genau kennen, was dazu führen kann, dass sie sich verirren.

Eine einfache Abhilfe diesbezüglich stellt die rechtzeitige Besorgung von beispielsweise Reisekarten, Ausflugskarten oder Wanderkarten dar. Im Rahmen einer Reise-, Ausflug-, Wander- oder Urlaubsvorbereitung wird dies jedoch häufig vergessen. Am neuen Aufenthaltsort besteht zwar unter Umständen die Möglichkeit, Karten zur lokalen Geografie zu erwerben, allerdings ist es aufwändig einen Kiosk zu finden, der solche Karten anbietet. Überdies kann es vorkommen, z. B. bei Wandertouren, dass in entlegenen Gebieten kein Kiosk vorhanden und daher kein Erwerb einer Karte möglich ist. Dies trifft insbesondere auch zu, wenn Radtouren unternommen werden.

Das Fehlen einschlägiger Orientierungshilfen führt dazu, wie der Erfinder der vorliegenden Erfindung festgestellt hat, dass ortsunkundige Personen bei einem Aufenthalt in einer fremden Umgebung oftmals über die exakten geografischen Gegebenheiten vor Ort rätseln und sich hiernach mühsam bei Einheimischen erkundigen müssen.

Nach Erkennen dieses Problems setzt sich die Erfindung das Ziel, eine Orientierungshilfe anzugeben, mit welcher rasch und zuverlässig auf geografische Gegebenheiten geschlossen werden kann und welche einem großen Personenkreis zur Verfügung steht.

Das erfindungsgemäße Ziel wird durch eine Orientierungshilfe nach Anspruch 1 erreicht. Vorteilhafte Weiterbildungen sind Gegenstand der abhängigen Ansprüche 2 bis 5.

Die mit der Erfindung erzielten Vorteile sind insbesondere darin zu sehen, dass auf einfache Weise stetig verfügbare Information über geografische Verhältnisse bereitgestellt werden kann, welche grundsätzlich jedermann zugänglich ist. Dabei ist die vorgesehene geografische Karte an die jeweiligen lokalen Verhältnisse anpassbar beziehungsweise kann ortsabhängig variiert werden. Da die Orientierungshilfe öffentlich zugänglich eingesetzt werden kann, z. B. bei Tischen in Parks, Gaststätten oder Raststätten, kann die lokale Geografie auch ohne mitgeführte Karte in Erfahrung gebracht werden.

Ein anderer Vorteil der Erfindung ist darin zu sehen, dass die vorgesehene geografische Karte, welche erfindungsgemäß auf einer Tischplatte angebracht ist, einer Vielzahl von Individuen zur Verfügung steht und daher gleichsam mehrfach nutzbar ist. Auch wenn jemand einer erfindungsgemäßen Orientierungshilfe die lokalen geografischen Gegebenheiten entnimmt, bleibt die Tischplatte unversehrt und steht weiteren Nutzern zweckentsprechend zur Verfügung.

Diesbezüglich ist es insbesondere von Vorteil, wenn die Karte mit der Tischplatte flächig verpresst ist. Dies sorgt dafür, dass die Karte besonders dauerhaft auf der Tischplatte angebracht ist und somit einer Vielzahl von Nutzern zur Verfügung stehen kann.

Um die Karte über einen möglichst langen Zeitraum unversehrt möglichst vielen Benutzern zur Verfügung zu stellen, ist es bevorzugt, wenn die Stellfläche der Tischplatte zumindest im Bereich der Karte mit einem transparenten Kunststoff überzogen ist. In diesem Fall kann die Tischplatte für ihre üblichen Verwendungszwecke, z. B. das Abstellen von Speisentellern oder Getränken, genutzt werden, ohne dass die Karte beschädigt oder unlesbar wird.

In einer anderen bevorzugten Variante der Erfindung ist die Stellfläche der Tischplatte mit einer Kunststofffolie überzogen und sind die Karte und die Kunststofffolie mit der Tischplatte flächig verpresst. Dadurch wird eine besonders widerstandsfähige beziehungsweise resistente Tischoberfläche erzeugt und dementsprechend eine lange Nutzbarkeit der Karte erwirkt. Dies empfiehlt sich insbesondere, wenn Tische im Freien aufgestellt werden, z. B. entlang von Radwegen.

Günstig ist es auch, wenn die Karte zumindest die Hälfte der Stellfläche bedeckt, damit eine möglichst große Fläche für die Wiedergabe geografischer Informationen genutzt wird.

Weitere Vorteile und Wirkungen der Erfindung ergeben sich aus dem Zusammenhang der Beschreibung und dem nachfolgenden Ausführungsbeispiel.

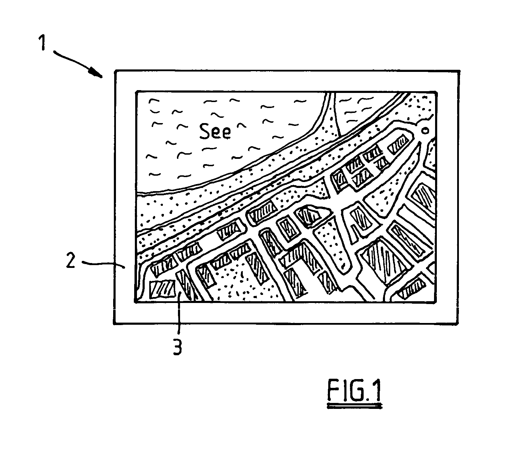

Es zeigt
Figur 1: eine erfindungsgemäße Orientierungshilfe.

In der einzigen Figur 1 ist eine erfindungsgemäße Tischplatte 1 dargestellt. Die Tischplatte 1 kann beispielsweise eine massive Tischplatte aus einem Holz, einem Kunststoff oder einem Metall oder eine aus Spänen gepresste Tischplatte sein. Die Tischplatte 1 weist eine Stellfläche 2 auf, die üblicherweise zum Abstellen von Tellern oder Gläsern dient. Auf der Oberfläche der Tischplatte 1 beziehungsweise der Stellfläche 2 ist weiter eine Karte 3 ersichtlich. Die Karte 3, üblicherweise eine käuflich erwerbbare, ungefaltete Karte aus Papier, wird vorzugsweise auf die Tischplatte 1 aufgelegt und anschließend auf diese gepresst. Dabei wird mit Vorteil gleichzeitig eine auf die Karte aufgelegte Kunststofffolie mitverpresst, sodass die Stellfläche 2 der Tischplatte 1 im Wesentlichen resistent gegenüber Wasser und anderen flüssigen Chemikalien ist, was eine lange Gebrauchsdauer der Tischplatte 1 und dementsprechend eine lange Lesbarkeit der Karte 3 sichert. Das Verpressen der Karte 3 aus Papier mit der ebenfalls wenige Zehntel Millimeter starken Kunststofffolie erfolgt bevorzugt bei erhöhten Temperaturen, z. B. bei einer Temperatur von etwa 150 °C bis 250 °C. Wenn die Tischplatte 1 aus Spänen und gegebenenfalls weiteren Materialien durch Pressen erstellt wird, kann ein Aufpressen einer Karte 3 aus Papier und einer schützenden Kunststofffolie in den Herstellungsprozess integriert werden. In diesem Fall werden die Späne und gegebenenfalls weiteren Materialien unter Hitze zuerst zu einem Tischplattenrohling vorverdichtet, auf welchen dann, noch bei erhöhter Temperatur, die Karte 3 und die Kunststofffolie aufgelegt werden, wonach der Tischplattenrohling mit der Karte 3 und der Kunststofffolie zur Tischplatte 1 fertig gepresst bzw. verdichtet wird.

Eine Tischplatte 1, wie in Figur 1 gezeigt, ist universell einsetzbar und kann beispielsweise in Gaststätten, Restaurants, Almhütten, Cafès oder entlang von Radwegen verwendet werden. Benötigt eine ortsunkundige bzw. nicht ortsansässige Person Auskunft zu geografischen Gegebenheiten, so kann sie diese einfach erfahren, indem sie sich einfach an einen Tisch mit einer erfindungsgemäßen Tischplatte 1 setzt. Da ein entsprechender Tisch neben einer Wiedergabe von geografischer Information sogleich seine üblichen Verwendungszwecke erfüllt, kann beispielsweise gleichzeitig zeitsparend mit einem Mittagessen die entsprechende Information über die örtlichen geografischen Gegebenheiten eingeholt werden. Zweckmäßigerweise ist der Ort des eigenen Aufenthaltes auf der Karte mit einem Punkt gekennzeichnet.

Im Rahmen der Erfindung können beliebige geografische Karten vorgesehen sein. So ist es beispielsweise möglich, auf einer erfindungsgemäßen Tischplatte 1 Wanderkarten, Seekarten, Stadtpläne, Militärkarten, Straßenkarten oder dergleichen vorzusehen.

## Patentansprüche

1. Orientierungshilfe, **dadurch gekennzeichnet, dass** die Orientierungshilfe aus einer Tischplatte (1) für öffentlich zugängliche Tische besteht, wobei auf einer Stellfläche (2) der Tischplatte (1) eine geografische Karte (3) sichtbar angebracht ist.

2. Orientierungshilfe nach Anspruch 1, **dadurch gekennzeichnet, dass** die Karte (3) mit der Tischplatte (1) flächig verpresst ist.

3. Orientierungshilfe nach Anspruch 1 oder 2, **dadurch gekennzeichnet, dass** die Stellfläche (2) der Tischplatte (1) zumindest im Bereich der Karte (3) mit einem transparenten Kunststoff überzogen ist.

4. Orientierungshilfe nach einem der Ansprüche 1 bis 3, **dadurch gekennzeichnet, dass** die Stellfläche (2) der Tischplatte (1) mit einer Kunststofffolie überzogen ist und die Karte (3) und die Kunststofffolie mit der Tischplatte (1) flächig verpresst sind.

5. Orientierungshilfe nach einem der Ansprüche 1 bis 4, **dadurch gekennzeichnet, dass** die Karte (3) zumindest die Hälfte der Stellfläche (2) bedeckt.
